# FASCICULE DE BREVET EUROPEEN

(11) **EP 3 892 450 B1**
(45) Date de publication et mention de la délivrance du brevet: **01.05.2024**
(21) Numéro de dépôt: 21160777.5
(22) Date de dépôt: 04.03.2021
(51) Int. Cl.: B29C 70/34, B29C 70/44, B29C 70/68, B29C 37/00, B29C 51/10, B29C 51/14, B29D 99/00, B29C 35/08, B29C 33/76

(54) **PROCEDE DE FABRICATION D'UNE PREFORME ENSACHEE D'UN COMPOSANT EN MATERIAU COMPOSITE ET PROCEDE DE FABRICATION DUDIT COMPOSANT**
VERFAHREN ZUR HERSTELLUNG EINER EINGETÜTETEN VORFORM EINES BAUTEILS AUS VERBUNDMATERIAL UND VERFAHREN ZUR HERSTELLUNG DIESES BAUTEILS
METHOD FOR MANUFACTURING A PREFORM BAG OF A COMPONENT MADE OF COMPOSITE MATERIAL AND METHOD FOR MANUFACTURING SAID COMPONENT

(30) Priorité: 07.04.2020 FR 2003464
(43) Date de publication de la demande: 13.10.2021
(73) Titulaire: AIRBUS OPERATIONS (S.A.S.), 31060 Toulouse (FR)
(72) Inventeur: PERCEVAULT, Maxime, 31060 TOULOUSE Cedex 9 (FR); DUTHILLE, Bertrand, 31060 TOULOUSE Cedex 9 (FR)
(74) Mandataire: Sarraméa, Claude

(56) Documents cités:
- US-A1- 2014 175 709
- US-B2- 9 096 021

## Description

### DOMAINE TECHNIQUE

La présente invention a trait à un procédé de fabrication d'une préforme ensachée d'un composant en matériau composite, conformément à la revendication 1.

Une préforme ensachée est une préforme pourvue d'un film d'ensachage sous vide. L'invention concerne également un procédé de fabrication de ce composant en un matériau composite par cuisson sous vide de la préforme, conformément à la revendication 10.

Ce composant peut être notamment un raidisseur d'un panneau autoraidi en matériau composite utilisé notamment dans le domaine de la construction des aéronefs.

### ETAT DE LA TECHNIQUE ANTÉRIEURE

Les composants en matériaux composites formés de fibres de renforts noyés dans une résine durcie sont largement utilisés, notamment dans l'industrie aéronautique.

En effet, on cherche de plus en plus à utiliser de tels composants dans le domaine de la construction des aéronefs, notamment en tant qu'éléments structurels.

Ces composants sont par exemple des pièces comportant une face pourvue de nervures ou structures en relief, telles que des panneaux auto-raidis d'aéronefs.

Des panneaux auto-raidis avec des raidisseurs intégrés en forme de U, qui est une configuration permettant d'obtenir des propriétés mécaniques optimales pour des pièces structurales d'aéronefs, ainsi qu'un procédé de mise en place des éléments de tels panneaux en vue de leur cuisson sont décrits dans le document EP-A1-1 537 982.

Pour fabriquer ces composants en matériaux composites, on commence par préparer une préforme, puis on procède à la cuisson, polymérisation de celle-ci sous pression dans un autoclave.

Il est nécessaire, avant de réaliser la cuisson de la préforme, de mettre la préforme sous vide lors d'une opération dite d'ensachage ou habillage sous vide.

Cette opération est essentielle pour permettre de distribuer la pression de l'autoclave pendant la cuisson, polymérisation, qui permet, quant à elle, d'obtenir une pièce finale possédant la géométrie et les propriétés désirées.

L'ensachage sous vide consiste donc à disposer et à sceller un film sur une préforme avant cuisson de celle-ci. La préforme peut être positionnée sur un outil de moulage. La préforme peut, par exemple, être sous la forme d'un tissu de fibres de renfort préimprégné d'une résine durcissable, éventuellement stratifié, ou être une préforme fibreuse sèche destinée à être ultérieurement noyée dans une résine durcissable, par exemple par une technique d'infusion de la résine.

Il s'est avéré que les techniques d'ensachage sous vide nécessitent l'utilisation d'outils coûteux et complexes.

Les techniques d'ensachage sous vide se sont, en outre, révélées difficiles à utiliser dans le cadre de la fabrication de composants volumineux ou longs, tels que les composants destinés à former les ailes des aéronefs, qui peuvent comprendre des sections structurelles de plus de 10 mètres de long.

De plus, dans le cas de pièces, composants, comportant une face pourvue de nervures ou structures en relief, telles que des panneaux auto-raidis d'aéronefs, comme ceux décrits dans le document EP-A1-1 537 982 déjà cité, on utilise généralement en tant que films d'ensachage des profilés en élastomère, pour répartir la pression régnant dans l'autoclave sur toute la surface des raidisseurs, afin d'obtenir un compactage maximal du stratifié sans porosité, et la géométrie et les épaisseurs recherchées.

Les profilés en élastomère ont l'avantage de pouvoir être réutilisables plusieurs fois, c'est-à-dire qu'ils peuvent être utilisés lors de plusieurs cuissons, polymérisations, mais leur durée de vie reste limitée à cause de leur fragilité à la manipulation et de leur vieillissement accéléré dans les conditions de température et de pression qui règnent dans un autoclave, par exemple 7 bars et 180°C.

Le coût de ces profilés est également très élevé du fait du prix de base du matériau, généralement un élastomère silicone, mais aussi du coût de la transformation de l'élastomère en profilé, généralement réalisée sous presse ou en autoclave.

En outre, dans le cas de pièces, composants comportant une face pourvue de nervures ou structures en relief, telles que des panneaux auto-raidis d'aéronefs, le film d'ensachage sous vide, généralement en élastomère, doit en général être positionné sur la face pourvue des nervures, ce qui complique l'obtention d'un recouvrement ajusté de ladite face par le film.

Pour remédier à ces problèmes, le document EP-A1-3115184 a proposé un système d'ensachage sous vide comprenant un film d'ensachage sous vide thermoformé en une forme externe du composant à fabriquer, ce dernier étant par exemple un panneau autoraidi.

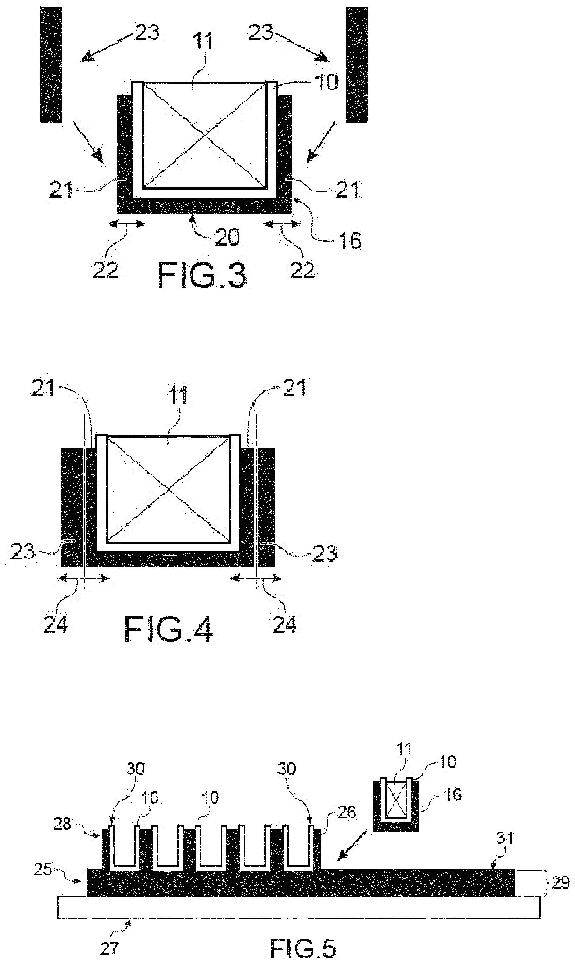

Un procédé proposé dans ce document pour thermoformer le film d'ensachage sous vide repose sur l'utilisation de modules de mise sous vide et de chauffage configurés chacun pour recouvrir une nervure de raidissement (voir notamment les figures 3 et 4 du document EP-A1-3115184 précité), ce qui représente un coût de mise en oeuvre qui reste relativement élevé.

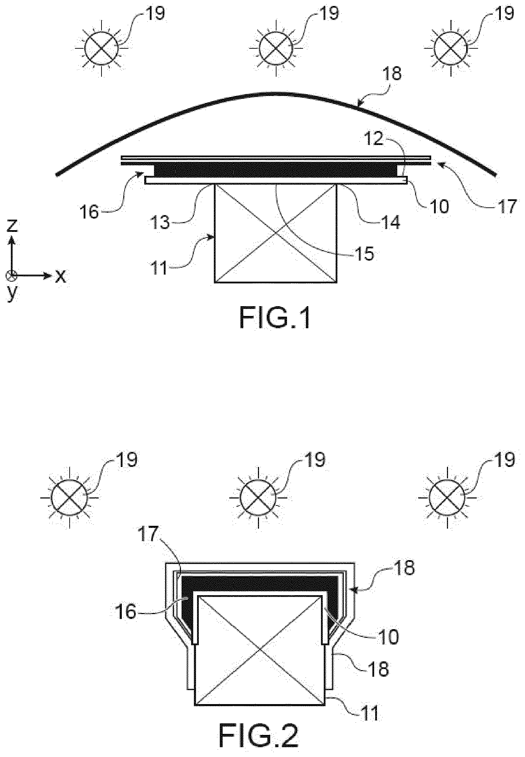

D'autres procédés proposés dans ce document pour thermoformer le film d'ensachage sous vide, reposent sur l'utilisation, en regard du film d'ensachage sous vide, d'un dispositif de soufflage d'air configuré pour appliquer une pression aérodynamique sur le film, au cours du thermoformage de ce dernier (voir notamment les figures 1 et 2 du document EP-A1-3115184 précité). Lorsque l'obtention d'un film de grandes dimensions est souhaitée, un tel dispositif se révèle cependant coûteux à réaliser et peu pratique à utiliser.

Lors de la fabrication de composants en matériau composite, outre des films d'ensachage sous vide, tels que des profilés en élastomère silicone, d'autres produits sont également utilisés, tels que des produits de drainage, et des mastics.

Tous ces produits présentent plusieurs inconvénients. Notamment, ils sont d'un coût élevé, ils sont à usage unique, leur durée de mise en oeuvre est longue et accroît la durée globale de fabrication du composant.

L'invention a notamment pour but d'apporter une solution aux problèmes exposés plus haut des procédés d'ensachage sous vide de préformes ainsi qu'aux procédés de fabrication de composants en matériau composite par cuisson sous vide de ces préformes.

Le but de l'invention est en particulier de simplifier le procédé d'ensachage sous vide, notamment en limitant les quantités de matériaux utilisés et leur coût, et en réduisant la quantité de déchets et la durée du procédé.

Le document US2014/0175709 divulgue un procédé de mise en forme d'une préforme selon l'art antérieur, conformément au préambule de la revendication 1.

### EXPOSÉ DE L'INVENTION

Ce but, et d'autres encore, sont atteints, conformément à l'invention, par un procédé de fabrication d'une préforme d'un composant en matériau composite pourvue d'un film d'ensachage sous vide, ce procédé comprenant les étapes successives suivantes :
a) dépôt d'un film thermoplastique d'ensachage sous vide sur un outil de formage dont la forme est conforme à une forme ou géométrie externe de la préforme ;
b) dépôt d'une feuille d'un matériau constituant la préforme sur l'outil de formage ;
c) dépôt d'au moins une couche antiadhésive, de préférence d'au moins deux couches antiadhésives, sur la feuille d'un matériau constituant la préforme ;
d) thermoformage du film thermoplastique, de la feuille d'un matériau constituant la préforme, et de la ou des couche(s) antiadhésive(s), sur l'outil de formage ;
e) séparation de la préforme pourvue du film thermoplastique d'ensachage sous vide, qui se trouve sur l'outil de formage, de la ou des couche(s) antiadhésive(s);
f) retrait de l'outil de formage de sorte à obtenir la préforme pourvue du film thermoplastique d'ensachage sous vide.

Le procédé selon l'invention fournit un procédé simple, peu coûteux, et rapide pour fabriquer une préforme d'un composant en matériau composite pourvue d'un film d'ensachage sous vide.

Dans le procédé selon l'invention, le film thermoplastique d'ensachage sous vide est formé, ou plus exactement thermoformé, lors de l'étape d), en même temps que la préforme, ce qui constitue une simplification considérable vis-à-vis des procédés où la préforme et le film d'ensachage sous vide sont séparément formés, et où l'on dispose ensuite le film d'ensachage sous vide préalablement formé sur la préforme également préalablement formée.

Le procédé selon l'invention permet au film thermoplastique d'épouser parfaitement la géométrie de la préforme et d'assurer ainsi la qualité des rayons, nervures lors de l'étape de cuisson, polymérisation en autoclave.

Notamment, le film thermoplastique assure qu'une pression homogène soit appliquée sur les raidisseurs pendant la polymérisation.

Le procédé selon l'invention apporte une solution aux problèmes exposés plus haut.

Le procédé selon l'invention permet d'importantes économies, notamment en termes de coûts de matériaux, car les films thermoplastiques d'ensachage sous vide mis en oeuvre selon l'invention sont beaucoup moins onéreux que les profilés en élastomères, même si ceux-ci peuvent être éventuellement réutilisés.

L'approvisionnement du film thermoplastique d'ensachage sous vide peut se faire facilement, notamment sous la forme d'un rouleau, ce qui est beaucoup plus simple que de former un profilé en élastomère à la géométrie de la pièce puis de le positionner.

En outre, dans le procédé selon l'invention, le film thermoplastique est formé simultanément au formage, ou plus exactement au thermoformage, de la préforme, ce qui limite les étapes et réduit considérablement la durée du procédé.

Le procédé selon l'invention comporte un nombre réduit d'opérations, et sa durée est donc plus courte, il utilise une quantité de matériaux bien moindre, et il produit moins de déchets.

Suivant d'autres aspects avantageux de l'invention, le procédé selon l'invention de fabrication d'une préforme d'un composant en matériau composite pourvue d'un film d'ensachage sous vide présente une ou plusieurs des caractéristiques suivantes, prise(s) isolément ou suivant toutes les combinaisons techniquement possibles :
- le thermoformage de l'étape d) est un thermoformage sous vide avec une membrane élastomère placée sous vide et avec un chauffage par un rayonnement infrarouge de l'outil de formage, du film thermoplastique, de la feuille d'un matériau constituant la préforme, de la ou des couche(s) antiadhésive(s), et de la membrane élastomère ; la membrane élastomère étant ensuite retirée;
- le thermoformage de l'étape d) est un thermoformage mécanique (sans vide) avec une presse et une matrice chauffée;
- le thermoformage de l'étape d) est un thermoformage en autoclave ou en étuve ;
- le composant est un raidisseur d'un panneau autoraidi ;
- le matériau constituant la préforme est constitué de fibres de renfort pré-imprégnées d'une résine durcissable.

Selon un mode de réalisation préféré du procédé de l'invention, le composant est un panneau autoraidi en matériau composite constitué d'une peau de base sur l'une des faces de laquelle sont rapportés et disposés côte à côte des raidisseurs en forme de L, formant des nervures, dont les parties de base du L sont plaquées contre ladite peau, avec interposition, entre les branches du L en regard de deux raidisseurs adjacents, d'une structure d'interfaçage appelée « clou », constituée par deux demi-clous accolés.

Selon un autre mode de réalisation préféré du procédé de l'invention, le composant est un panneau autoraidi en matériau composite constitué d'une peau de base sur l'une des faces de laquelle sont rapportés et disposés côte à côte des raidisseurs en forme de U, formant des nervures, dont les parties de liaison des branches du U sont plaquées contre ladite peau, avec interposition, entre les branches du U en regard de deux raidisseurs adjacents, d'une structure d'interfaçage appelée « clou », constituée par deux demi-clous accolés.

Le procédé de fabrication de la préforme d'un tel composant comprend les étapes successives suivantes :
A) fabrication de préformes de raidisseurs en forme de U, chacune pourvue d'un film thermoplastique d'ensachage sous vide sur les surfaces internes du U, et chacune se trouvant sur un outil de formage à section conforme en forme de U renversé, par les étapes a) à e) du procédé décrit plus haut ;
B) retournement de chacun des outils de formage à 180°C;
C) mise en place, sur chacun des flancs de chaque outil de formage revêtu, d'un demi-clou ;
D) compactage individuel de chaque outil de formage pourvu des demi-clous ;
E) positionnement des outils de formage côte à côte sur la peau de base de façon à appliquer contre cette peau une surface plane continue définie d'une part, par la face externe des parties de liaison des branches des U des préformes des raidisseurs et, d'autre part, par les clous séparant deux préformes de raidisseur adjacentes ;
F) retrait des outils de formage ;
G) assemblage de tous les films thermoplastiques d'ensachage sous vide des préformes de raidisseur pour obtenir un film thermoplastique d'ensachage sous vide unique.

Ce procédé possède, du fait que l'étape A) est réalisée au moyen du procédé de fabrication selon l'invention d'un composant en matériau composite pourvu d'un film thermoplastique d'ensachage sous vide, tous les avantages inhérents à ce procédé qui ont déjà été exposés plus haut.

En particulier, l'habillage de mise sous vide est déjà en place lors de l'intégration des raidisseurs sur le panneau ce qui entraîne une diminution des consommables par rapport aux procédés connus.

Ce procédé de fabrication pourrait être facilement adapté par l'homme du métier pour fabriquer un panneau autoraidi en matériau composite constitué d'une peau de base sur l'une des faces de laquelle sont rapportés et disposés côte à côte des raidisseurs en forme de L formant des nervures dont les parties de base du L sont plaquées contre ladite peau, avec interposition, entre les branches du L en regard de deux raidisseurs adjacents, d'une structure d'interfaçage appelée « clou », constituée par des demi-clous accolés.

L'invention concerne également un procédé de fabrication d'un composant en matériau composite, par cuisson sous vide, comprenant les étapes successives suivantes :
A1) fabrication d'une préforme du composant en matériau composite pourvue d'un film thermoplastique d'ensachage sous vide au moyen du procédé décrit plus haut ;
B1) cuisson sous vide de la préforme ;
C1) obtention du composant en matériau composite.

Ce procédé possède, du fait que l'étape A1) est réalisée au moyen du procédé de fabrication selon l'invention, d'un composant en matériau composite pourvu d'un film thermoplastique, tous les avantages inhérents à ce procédé qui ont déjà été exposés plus haut.

L'invention sera mieux comprise, et d'autres détails, avantages et caractéristiques de celle-ci apparaîtront à la lecture de la description qui suit faite à titre d'exemple non limitatif et en référence aux dessins joints.

### BRÈVE DESCRIPTION DES DESSINS

Les figures 1 et 2 sont des vues schématiques de côté qui illustrent respectivement des étapes successives a) à d) d'un procédé de fabrication d'une préforme d'un composant en matériau composite, tel qu'un raidisseur de panneau autoraidi, pourvue d'un film thermoplastique d'ensachage sous vide, selon un mode de réalisation préféré de l'invention.
Les figures 3, 4 et 5 sont des vues schématiques de côté qui illustrent respectivement des étapes B) à G) d'un procédé de fabrication d'une préforme d'un composant en matériau composite selon un mode de réalisation préféré du procédé de l'invention dans lequel le composant est un panneau autoraidi en matériau composite

Dans l'ensemble de ces Figures, des références identiques peuvent désigner des éléments identiques ou analogues.

### EXPOSÉ DÉTAILLÉ DE MODES DE RÉALISATION PARTICULIERS

Les Figures 1 et 2 illustrent schématiquement des étapes successives a) à d) d'un procédé de fabrication d'une préforme d'un composant en matériau composite pourvue d'un film thermoplastique d'ensachage sous vide, selon un mode de réalisation préféré de l'invention, dans lequel le thermoformage (étape d)) est un thermoformage sous vide, avec une membrane élastomère placée sous vide et avec un chauffage par un rayonnement infrarouge de l'outil de formage, du film thermoplastique, des couches anti-adhésives, et de la membrane déposés.

Une telle préforme pourvue d'un tel film d'ensachage sous vide est destinée à la fabrication d'un composant en matériau composite par cuisson sous vide, comme cela apparaîtra plus clairement dans ce qui suit.

Le procédé selon l'invention est ici plus particulièrement destiné à la réalisation d'une préforme d'un raidisseur d'un panneau autoraidi.

La première étape a) du procédé selon l'invention comprend le dépôt d'un film thermoplastique d'ensachage sous vide 10 sur un outil de formage 11 dont la forme est conforme à une forme ou géométrie externe de la préforme que l'on souhaite préparer.

Dans la présente description, on définit par commodité un repère orthonormé XYZ, dans lequel la direction Z est localement orthogonale à l'outil de formage 11 et correspond à la direction de la hauteur lorsque l'outil de formage 11 est agencé horizontalement (une telle orientation n'étant toutefois pas nécessaire à la mise en oeuvre du procédé dans sa définition la plus générale).

Par film thermoplastique 10, on entend que ce film est constitué par un ou plusieurs polymères thermoplastiques.

Différents types de films thermoplastiques peuvent être utilisés. Le film est choisi notamment de manière à obtenir une répartition uniforme de la pression sur la surface de la préforme lors de sa cuisson, polymérisation sous vide en autoclave.

Le film thermoplastique peut être notamment constitué par un ou plusieurs polymère(s) thermoplastique(s), choisi(s) de préférence parmi les polyamides tels que les Nylon^{®}, et les polyesters tels que les poly(téréphtalate d'éthylène)s (PET).

Un film thermoplastique en polyamide présente de bonnes caractéristiques d'allongement avec un épaisseur plus importante qu'un film en polyester, tel qu'un PET, qui reste plus rigide, et pour lequel une épaisseur moindre suffit.

Généralement, le film thermoplastique présente un allongement à la rupture de 250 à 400% et a une épaisseur de 100 µm à 400 µm, de préférence de 300 à 400 µm, par exemple de 350 µm.

L'épaisseur des films en polyamides est généralement de 300 µm à 400 µm, et l'épaisseur des films en polyesters est généralement de 100 µm à 150 µm.

L'allongement à la rupture est plus important pour les films en polyamides que pour les films en polyesters.

Le film thermoplastique d'ensachage sous vide peut être constitué par un ou plusieurs polymère(s) thermoplastique(s), choisis de préférence parmi les polyamides tels que les Nylon^{®}, et les polyesters tels que les poly (téréphtalate d'éthylène)s (PET), ce ou ces polymère(s) étant co-extrudés avec un fluoropolymère tels qu'un éthylène tétrafluoroéthylène (ETFE), un polytétrafluoroéthylène (PTFE) ou un Perfluoro éthylène propylène, (PFEP) encore appelé résine fluorée éthylène-propylène (« *Fluorinated Ethylene Propylene (FEP) resin »* en anglais). Le PFEP (résine FEP) est un copolymère d'hexafluoropropylène et de tétrafluoroethylène.

Le film 10 présente ainsi des propriétés antiadhésives, au moins sur une face 12 (face supérieure selon Z), permettant le démoulage du composant au terme de la cuisson sous vide de ce dernier, et sans que le composant ne soit pollué.

Dans d'autres modes de réalisation, le film 10 est constitué par un ou plusieurs polymère(s) thermoplastique(s), choisis de préférence parmi les polyamides tels que les Nylon^{®}, et les polyesters, ayant subi par exemple un traitement physico-chimique, tel qu'un traitement plasma ou corona, permettant de conférer au film 10 les propriétés anti-adhésives précitées. Plus exactement, la tension superficielle de la surface 12 du film 10 en contact avec la préforme peut être modifiée par un traitement physico-chimique, tel qu'un traitement plasma ou corona.

Le film 10 peut éventuellement être multicouche et peut comprendre, dans les différentes couches, des matériaux présentant des propriétés différentes, telles que des propriétés d'étanchéité au vide, des propriétés adhésives, ou au contraire anti-adhésives (autodémoulantes).

Par exemple, un film autodémoulant en fluoropolymère (voir plus haut) peut être intégré au film 10 pour permettre un démoulage facile de la pièce composite après cuisson, polymérisation, et sans pollution.

L'outil de formage 11 tel qu'un poinçon de formage, a une forme conforme à une forme ou géométrie externe de la préforme que l'on souhaite préparer.

A titre d'exemple, sur les Figures l'outil de formage 11 a une section en forme de parallélogramme (dans des plans XZ), par exemple de forme rectangulaire. Les angles supérieurs (dans le sens Z) 13, 14, de ce parallélogramme peuvent être arrondis. Cette forme est conforme à la forme en U d'une préforme de raidisseur de panneau autoraidi.

L'outil de formage 11 présente une surface supérieure d'appui plane 15, sur laquelle est déposé le film thermoplastique 10.

Un épaulement (non représenté) peut être prévu dans l'outil de formage 11 pour compenser la surépaisseur induite par le film thermoplastique 10.

De la même manière, des cavités (non représentées) peuvent être prévues dans l'outil de formage 11 pour intégrer des renforts généralement en un matériau analogue au matériau constituant la préforme, tel qu'un matériau préimprégné.

Le dépôt du film 10 est par exemple opéré en étendant le film 10 à partir d'un rouleau, ou en extrudant directement le film au-dessus de la surface supérieure d'appui plane 15 de l'outil de formage 11.

A l'issue du dépôt, le film 10, qui est plan, repose sur la surface supérieure d'appui plane 15 de l'outil de formage 11.

Une deuxième étape b) du procédé selon l'invention comprend le dépôt d'une feuille 16 d'un matériau constituant la préforme sur la feuille thermoplastique 10.

Le matériau constituant la préforme peut être un tissu de fibres de renfort préimprégné d'une résine durcissable, éventuellement stratifié, ou être une préforme fibreuse sèche destinée à être ultérieurement noyée dans une résine durcissable, par exemple par une technique d'infusion de la résine.

La feuille 16, avant formage est plane.

Une troisième étape c) du procédé selon l'invention, comprend le dépôt d'au moins une couche, de préférence d'au moins deux couches, généralement de deux couches, antiadhésive(s), autodémoulante(s), sur la feuille d'un matériau constituant la préforme précédemment déposée. Par exemple, comme cela est représenté sur la Figure 1, cette étape peut comprendre le dépôt de deux couches anti-adhésives 17.

La ou les couche(s)antiadhésive(s) 17 sont généralement en un fluoropolymère tel que décrit plus haut. Une quatrième étape d) du procédé selon l'invention comprend le thermoformage du film thermoplastique 10, de la feuille d'un matériau constituant la préforme 16, et de la ou des couche(s) antiadhésive(s) 17, sur l'outil de formage 11.

Selon un mode de réalisation préféré de l'invention, tel que montré sur les Figures 1 et 2, le thermoformage (étape d)) est un thermoformage sous vide avec une membrane élastomère 18 placée sous vide, et avec un chauffage par un rayonnement infrarouge de l'outil de formage 11, du film thermoplastique 10, de la feuille d'un matériau constituant la préforme 16, de la ou des couche(s) antiadhésive(s) 17, et de la membrane élastomère 18.

Plus précisément, comme le montre la Figure 1, une membrane élastomère 18 est placée sur un bâti (non représenté), au-dessus de l'outil de formage 11, du film thermoplastique 10, de la feuille d'un matériau constituant la préforme 16, et de la ou des couche(s) antiadhésive(s) 17. Autrement dit, la membrane élastomère 18 est intégrée à la machine de formage directement sur sa partie supérieure.

Cette membrane élastomère 18 est une simple feuille et non un profilé mis en forme par des opérations complexes comme dans les procédés de l'art antérieur.

Cette membrane élastomère 18 est généralement en une silicone (polysiloxane), mais d'autres élastomères sont également disponibles sur le marché pour le formage.

Cette membrane élastomère 18, sous l'effet du vide va venir former mécaniquement la préforme ainsi que le film thermoplastique 10 sur l'outil de formage 11. Cette membrane peut donc être appelée membrane de formage.

L'étape d) comprend ensuite le chauffage par un rayonnement infrarouge de l'outil de formage 11, du film thermoplastique 10, de la feuille d'un matériau constituant la préforme 16, de la ou des couche(s) antiadhésive(s) 17, et de la membrane 18, et le thermoformage du film thermoplastique 10, de la feuille 16, de la ou des couche(s) antiadhésive(s) 17, et de la membrane élastomère 18 sur l'outil de formage 11.

Sur les Figures 1 et 2, le chauffage par rayonnement infrarouge est assuré par des lampes à infrarouge 19.

A titre d'exemple, trois lampes à infrarouge 19 sont représentées sur les Figures 1 et 2, disposées au-dessus de la membrane élastomère 18, ou plus exactement au-dessus du bâti supportant cette membrane, mais un nombre différent de lampes à infrarouge disposées différemment pourrait être mis en oeuvre.

Le chauffage doit être tel qu'il permette d'atteindre la température de thermoformage du matériau constituant la préforme.

De manière générale, et quel que soit le mode de réalisation de l'étape de thermoformage d), la température de thermoformage du matériau constituant la préforme, qui peut se situer par exemple autour de 90°C, correspond aussi à la température de changement d'état (Tg par exemple) des polymères thermoplastiques principalement utilisés pour constituer le film thermoplastique 10, tels que les polyamides et les polyesters.

Il est ainsi possible d'obtenir une légère déformation plastique qui fige ainsi la préforme dans sa forme.

Cette température de thermoformage, généralement voisine de 90°C, est suffisante pour assurer que la géométrie du film thermoplastique ainsi formé soit maintenue.

Lorsque la température de thermoformage du matériau constituant la préforme 16 est atteinte, le bâti descend, la membrane élastomère 18 enveloppe alors l'outil de formage 11, le film thermoplastique 10, la feuille d'un matériau constituant la préforme 16, et la ou les couche(s) antiadhésive(s) 17.

L'étape comprend ensuite une mise sous vide de la membrane élastomère 18 ainsi positionnée. C'est la déformation de la membrane élastomère 18 sous l'action du vide qui vient déformer le matériau constituant la préforme 16.

La membrane élastomère 18 est maintenue sous vide pendant une durée suffisante pour que la préforme soit déformée et que le thermoformage soit réalisé.

La Figure 2 montre l'outil de formage 11 sur lequel a été formé, lors de l'étape d) le film thermoplastique 10, la feuille 16, et la ou des couche(s) antiadhésives(s) 17, avec la membrane 18.

Sur la Figure 2, la feuille 16, initialement plane a été formée en une préforme qui possède la géométrie du composant que l'on souhaite préparer. Ainsi sur la Figure 2, la feuille 16, a formé sur l'outil de formage une préforme en U qui est la forme d'un raidisseur de panneau autoraidi que l'on souhaite préparer.

L'homme du métier comprendra que des préformes en L pourraient également être préparées moyennant quelques adaptations du procédé.

A l'issue de la durée de maintien sous vide susmentionnée, l'étape comprend le refroidissement de la membrane élastomère 18 jusqu'à la température ambiante.

Le refroidissement est généralement un refroidissement forcé à l'air, par exemple réalisé sous air pulsé.

A l'issue du refroidissement on relève, retire la membrane élastomère 18, plus précisément, la partie supérieure de la machine de formage avec la membrane élastomère 18 s'ouvre.

Selon un autre mode de réalisation, le thermoformage de l'étape d) peut être un thermoformage mécanique (sans vide appliqué) réalisé avec une presse et une matrice chauffée.

Autrement dit, au lieu d'une membrane on utilise une matrice mécanique, et on n'applique pas de vide.

La matrice est chauffée à la température de thermoformage par un chauffage par rayonnement Infrarouge ou autre, ou par conduction, puis la matrice ainsi chauffée est amenée vers la feuille de matériau constituant la préforme 16.

La matrice peut être une matrice dite matrice auto-chauffante avec des moyens de chauffage intégrés.

Selon encore un autre mode de réalisation, le thermoformage de l'étape d) peut être un thermoformage en autoclave ou en étuve.

Ce thermoformage en autoclave ou en étuve est également réalisé à l'aide d'une membrane élastomère. On se sert de l'autoclave ou de l'étuve pour leur apport de chaleur de la même manière que les lampes à infrarouges, et on utilise le système de vide de l'autoclave ou de l'étuve.

Une cinquième étape e) du procédé selon l'invention comprend la séparation de la préforme 16 pourvue du film thermoplastique d'ensachage sous vide 10 (d'une part), de la ou des couche(s) antiadhésive(s) 17 (d'autre part). La préforme 16, pourvue du film thermoplastique d'ensachage sous vide 10, se trouve, lors de cette étape, toujours sur l'outil de formage 11.

Une sixième étape f) du procédé selon l'invention comprend le retrait de l'outil de formage 11, moyennant quoi on obtient la préforme 16 pourvue du film thermoplastique d'ensachage sous vide 10.

Selon un mode de réalisation particulièrement préféré, le composant est un panneau autoraidi en matériau composite constitué d'une peau de base sur l'une des faces de laquelle sont rapportés et disposés côte à côte des raidisseurs en forme de U formant des nervures dont les parties de liaison des branches du U sont plaquées contre ladite peau, avec interposition, entre les branches du U en regard de deux raidisseurs adjacents, d'une structure d'interfaçage communément appelée « clou », constitué par des demi-clous accolés.

Ce procédé comprend les étapes A) à G) exposées plus haut.

L'étape A) comprend la fabrication de préformes de raidisseurs en forme de U , chacune pourvue d'un film thermoplastique d'ensachage sous vide 10 sur les surfaces internes du U, et chacune se trouvant sur un outil de formage 11 à section conforme en forme de U renversé, par les étapes a) à e) du procédé décrit plus haut.

La Figure 2 montre l'outil de formage 11 sur lequel a été formé, lors de l'étape d) du procédé décrit plus haut, le film thermoplastique 10, la feuille 16, et les couches anti-adhésives 17.

Sur la Figure 2 est également représentée une membrane élastomère 18, qui est utilisée lorsque le thermoformage (étape d)) est un thermoformage sous vide avec une membrane élastomère 18 placée sous vide. Cette membrane élastomère 18 est ensuite retirée.

Sur la Figure 2, la feuille 16 a formé une préforme en U (également désignée par 16) qui est la forme d'un raidisseur de panneau autoraidi que l'on souhaite préparer.

La cinquième étape e) du procédé décrit plus haut comprend la séparation de la préforme 16 pourvue du film thermoplastique d'ensachage sous vide 10 (d'une part), de la ou des couche(s) anti-adhésive(s) 17 (d'autre part), moyennant quoi on obtient ainsi des préformes de raidisseurs en forme de U, chacune pourvue d'un film thermoplastique d'ensachage sous vide 10 sur les surfaces internes, inférieures du U, et chacune se trouvant sur un outil de formage 11 à section conforme en forme de U renversé.

L'étape B) comprend le retournement de chacun des outils de formage à 180°.

Chacun des outils de formage 11 est alors dans la configuration montrée sur la Figure 3, le U de la préforme 16 étant en position normale non renversée avec la partie de liaison du U formant la base 20 de la préforme, en position inférieure. Cette partie de liaison du U formant la base de la préforme est située entre deux branches du U formant les flancs 21 de la préforme qui s'étendent verticalement vers le haut depuis ladite base 20.

Autrement dit, la préforme 16 forme un profilé en « U » sur l'outil de formage 11 orienté vers le bas. Lesdites branches du U ou flancs 21 forment ensuite les rayons ou nervures de la préforme du panneau nervuré.

Pour éviter que les préformes de raidisseurs en forme de U, chacune pourvue d'un film thermoplastique d'ensachage sous vide 10 ne tombent, des rubans adhésifs de maintien peuvent être mis en place à la jonction entre le film thermoplastique 10 et l'outil de formage 11 (on fait en sorte qu'il n'y ait pas de contact entre la préforme « fraîche » et le ruban adhésif). Une « surlongueur » est laissée au film thermoplastique 10.

Les rubans adhésifs sont retirés lors de l'étape E) qui comprend le positionnement des outils de formage 11, et avant l'étape F) qui comprend le retrait des outils de formage 11.

Autrement dit, les rubans adhésifs sont retirés une fois le panneau constitué, juste avant de retirer les outils de formage 11 du panneau.

Un système de type barre aimanté peut être envisagé pour éviter d'utiliser un ruban adhésif.

Les flancs 21 de la préforme peuvent avoir une épaisseur 22 de 3 à 10mm.

L'étape C) comprend, comme le montre la Figure 3, la mise en place sur chacun des flancs 21 de la préforme d'un demi-clou 23.

Les deux demi-clous 23 peuvent avoir une épaisseur de 3 à 6mm.

Les deux demi-clous 23 sont généralement en le même matériau que la préforme 16.

Cette étape peut comprendre, en outre, la mise en place entre chacune des deux branches du U formant les flancs 21 de la préforme 16, et chacun des deux demi-clous 23, d'une résine de remplissage (non représentée) pour combler l'espace qui peut exister entre les flancs 21 et les demi-clous 23.

La résine de remplissage est généralement constituée par le même matériau que la préforme, par exemple par un tissu de fibres de renfort préimprégné d'une résine durcissable, éventuellement stratifié.

L'étape D), montrée sur la Figure 4 comprend le compactage individuel de chaque outil de formage 11 pourvu des demi-clous 23 sur les flancs 21 de la préforme, et éventuellement d'une résine de remplissage.

Le compactage est un compactage mécanique qui est réalisé à l'aide de moyens dédiés. Ainsi, le compactage peut être réalisé par exemple en plaçant deux coussins gonflables de chaque côté de la préforme du raidisseur. Ces coussins gonflables viennent au contact de la préforme du raidisseur.

Cette opération de compactage est réalisée pour faire adhérer les éléments entre eux et non pas pour réduire la porosité.

A l'issue de cette étape, chaque préforme, montrée sur la Figure 4, après compactage, forme un profilé en « U » pourvu de demi-clous 23, sur les flancs 21 de la préforme, et ses flancs ont une épaisseur qui a été accrue de l'épaisseur de chacun des demi-clous 23. Cette épaisseur 24 peut être par exemple de 3 à 6 mm.

L'étape E), montrée sur la Figure 5, comprend le positionnement des outils de formage 11 côte à côte sur la peau de base 25, de façon à appliquer contre cette peau 25 une surface plane continue, définie d'une part par la face externe des parties de liaison ou bases 20 des branches des U des préformes des raidisseurs, et d'autre part par les clous 26 séparant deux préformes de raidisseurs adjacents. On obtient ainsi une préforme du panneau nervuré.

La peau de base 25 de la préforme 28 du panneau nervuré est généralement disposée sur un outil de moulage 27.

La préforme 28 comporte, par exemple, une portion de panneau 29 formée par la peau 25, les bases des préformes des raidisseurs et les bases des clous, du côté 31 de la préforme disposé sur l'outil de moulage 27. Les flancs des préformes des raidisseurs et les clous 26 forment les nervures 30 de la préforme.

L'outil de moulage 27 est configuré pour supporter la préforme 28.

L'étape F), également montrée sur la Figure 5, comprend le retrait des outils de formage 11, les uns après les autres.

Le film thermoplastique d'ensachage sous vide 10 reste en place, et épouse parfaitement la géométrie des raidisseurs.

L'étape G) comprend l'assemblage de tous les films d'ensachage des préformes de raidisseur pour former un film thermoplastique d'ensachage sous vide unique.

Les films d'ensachage sous vide 10 de chaque préforme de raidisseur sont assemblés au niveau des sommets respectifs des nervures 30 pour former un seul film d'ensachage sous vide. Un tel assemblage permet en particulier d'éviter au mieux le contact entre les zones de jonction des films et le composant, avant cuisson de ce dernier. Cela est avantageux dans la mesure où les jonctions occasionnent dans certains cas une surépaisseur locale de l'assemblage des films susceptible de marquer le composant.

Chaque jonction peut être réalisée au moyen de mastic interposé entre deux films 10 consécutifs de sorte que le mastic constitue le sommet de la nervure 30 correspondante.

A ce stade, des éléments d'outillage accessoires conventionnels peuvent être mis en place sur le film thermoplastique d'ensachage sous vide.

Autrement dit, préalablement à la polymérisation, et suite au retrait des outils de formage, on assure la continuité de la mise en place de l'habillage sous vide, à l'aide de divers produits auxiliaires tels que du mastic, et on met en place des éléments métalliques qui permettent de maintenir géométriquement le panneau lors de la polymérisation.

L'invention concerne également un procédé de fabrication d'un composant en matériau composite, par cuisson sous vide, comprenant les étapes successives suivantes :
A1) fabrication d'une préforme du composant en matériau composite pourvue d'un film thermoplastique d'ensachage sous vide au moyen du procédé décrit plus haut ;
B1) cuisson sous vide de la préforme ;
C1) obtention du composant en matériau composite.

L'étape B1) comporte la mise sous vide partiel de l'espace ménagé entre, d'une part, le film thermoplastique d'ensachage sous vide, ou l'assemblage de films d'ensachage sous vide, et, d'autre part, la préforme et l'outil de moulage en vue de la cuisson de la préforme.

Il faut comprendre par-là que l'étape B1) comporte, le cas échéant, l'infusion de résine dans le cas où la préforme est une préforme sèche, et comporte, dans tous les cas, le durcissement de la résine au sein de l'espace, mis sous vide partiel, entre la préforme et le film thermoplastique d'ensachage sous vide, aboutissant à l'obtention du composant en matériau composite.

A cet effet, l'étape B1) comporte de préférence un chauffage sous vide et sous pression de la préforme et de la résine. Dans ce cas, il en résulte également un chauffage du film d'ensachage sous vide ou de l'assemblage de films d'ensachage sous vide, ce qui favorise une déformation du film d'ensachage sous vide ou de l'assemblage de films ayant pour conséquence que le film d'ensachage sous vide recouvre au plus près la préforme et évite ainsi au mieux la présence de poches d'air dans l'espace entre la préforme et le film thermoplastique d'ensachage sous vide. Une telle déformation du film ou de l'assemblage de films comprend typiquement un étirement de ce dernier permettant un recouvrement ajusté des parties en relief de la préforme. En l'occurrence, un tel étirement du film permet notamment un recouvrement ajusté de rayons de raccordement de raidisseurs à la portion de panneau.

Autrement dit, lors de l'étape B1) l'effet de la pression régnant dans l'autoclave, par exemple 7 bar, associée à la déformation du film thermoplastique par chauffage, sont parmi les éléments clés qui permettent d'obtenir un panneau possédant la qualité désirée.

A titre d'exemple, la pression qui règne dans l'autoclave est typiquement 6 à 11 bars pour une pièce monolithique.

A titre d'exemple, la température qui règne dans l'autoclave est typiquement de 120°C à 180°C, par exemple de 120°C, 145°C ou 180°C, suivant les systèmes de résine.

## Revendications

1. Procédé de fabrication d'une préforme d'un composant en matériau composite pourvue d'un film d'ensachage sous vide (10), ce procédé comprenant les étapes successives suivantes :
a) dépôt d'un film thermoplastique d'ensachage sous vide (10) sur un outil de formage (11) dont la forme est conforme à une forme ou géométrie externe de la préforme ;
b) dépôt d'une feuille d'un matériau constituant la préforme (16) sur l'outil de formage (11) ;
c) dépôt d'au moins une couche anti-adhésive, de préférence d'au moins deux couches anti-adhésives (17), sur la feuille d'un matériau constituant la préforme (16) ;
d) thermoformage du film thermoplastique (10), de la feuille d'un matériau constituant la préforme (16), et de la ou des couche(s) anti-adhésive(s) (17), sur l'outil de formage (11);
e) séparation de la préforme pourvue du film thermoplastique d'ensachage sous vide (10), qui se trouve sur l'outil de formage (11), de la ou des couche(s) anti-adhésive(s) (17);
f) **caractérisé par** le retrait de l'outil de formage (11) de sorte à obtenir la préforme pourvue du film thermoplastique d'ensachage sous vide.

2. Procédé selon la revendication 1, dans lequel le thermoformage de l'étape d) est un thermoformage sous vide avec une membrane élastomère (18) placée sous vide et avec un chauffage par un rayonnement infrarouge (19) de l'outil de formage (11), du film thermoplastique (10), de la feuille d'un matériau constituant la préforme (16), de la ou des couche(s) antiadhésive(s) (17), et de la membrane élastomère (18) ; la membrane élastomère (18) étant ensuite retirée.

3. Procédé selon la revendication 1, dans lequel le thermoformage de l'étape d) est un thermoformage mécanique avec une presse et une matrice chauffée.

4. Procédé selon la revendication 1, dans lequel le thermoformage de l'étape d) est un thermoformage en autoclave ou en étuve.

5. Procédé selon l'une quelconque des revendications précédentes, dans lequel le matériau constituant la préforme est constitué de fibres de renfort pré-imprégnées d'une résine durcissable.

6. Procédé selon l'une quelconque des revendications précédentes, dans lequel le composant est un raidisseur d'un panneau autoraidi.

7. Procédé selon l'une quelconque des revendications 1 à 5, dans lequel le composant est un panneau autoraidi en matériau composite constitué d'une peau de base sur l'une des faces de laquelle sont rapportés et disposés côte à côte des raidisseurs en forme de L, formant des nervures, dont les parties de base du L sont plaquées contre ladite peau, avec interposition, entre les branches du L en regard de deux raidisseurs adjacents, d'une structure d'interfaçage appelée « clou », constituée par deux demi-clous accolés.

8. Procédé selon l'une quelconque des revendications 1 à 5, dans lequel le composant est un panneau autoraidi en matériau composite constitué d'une peau de base (27) sur l'une des faces de laquelle sont rapportés et disposés côte à côte des raidisseurs en forme de U, formant des nervures, dont les parties de liaison (20) des branches du U (21) sont plaquées contre ladite peau (27), avec interposition, entre les branches du U (21) en regard de deux raidisseurs adjacents, d'une structure d'interfaçage appelée « clou », constituée par deux demi-clous accolés.

9. Procédé selon la revendication 8, dans lequel le procédé comprend les étapes successives suivantes :
A) fabrication de préformes de raidisseurs en forme de U , chacune pourvue d'un film thermoplastique d'ensachage sous vide sur les surfaces internes du U, et chacune se trouvant sur un outil de formage à section conforme en forme de U renversé, par les étapes a) à e) du procédé décrit plus haut ;
B) retournement de chacun des outils de formage à 180°;
C) mise en place, sur chacun des flancs de chaque outil de formage revêtu, d'un demi-clou ;
D) compactage individuel de chaque outil de formage pourvu des demi clous ;
E) positionnement des outils de formage côte à côte sur la peau de base de façon à appliquer contre cette peau une surface plane continue définie d'une part, par la face externe des parties de liaison des branches des U des préformes des raidisseurs et, d'autre part, par les clous séparant deux préformes ;
F) retrait des outils de formage ;
G) assemblage de tous les films thermoplastiques d'ensachage sous vide des préformes de raidisseur pour obtenir un film thermoplastique d'ensachage sous vide unique.

10. Procédé de fabrication d'un composant en matériau composite, par cuisson sous vide, comprenant les étapes successives suivantes :
A1) fabrication d'une préforme du composant en matériau composite pourvue d'un film thermoplastique d'ensachage sous vide au moyen du procédé selon l'une quelconque des revendications 1 à 9 ;
B1) cuisson sous vide de la préforme ;
C1) obtention du composant en matériau composite.

## Patentansprüche

1. Verfahren zur Herstellung einer Vorform eines Bauteils aus Verbundmaterial, die mit einer Vakuumfolie (10) versehen ist, wobei das Verfahren die folgenden aufeinander folgenden Schritte umfasst:
a) Aufbringen einer thermoplastischen Vakuumfolie (10) auf ein Formwerkzeug (11), dessen Form einer äußeren Form oder Geometrie der Vorform entspricht;
b) Aufbringen einer Lage eines die Vorform (16) bildenden Materials auf das Formwerkzeug (11);
c) Aufbringen mindestens einer Antihaftschicht, bevorzugt von mindestens zwei Antihaftschichten (17), auf die Lage eines die Vorform (16) bildenden Materials;
d) Thermoformen der thermoplastischen Folie (10), der Lage eines die Vorform (16) bildenden Materials und der Antihaftschicht(en) (17) auf dem Formwerkzeug (11);
e) Trennen der Vorform, die mit der thermoplastischen Vakuumfolie (10) versehen ist, die sich auf dem Formwerkzeug (11) befindet, von der oder den Antihaftschicht(en) (17);
f) **gekennzeichnet durch** das Entfernen des Formwerkzeugs (11), so dass die mit der thermoplastischen Vakuumfolie versehene Vorform erhalten wird.

2. Verfahren nach Anspruch 1, bei dem das Thermoformen des Schritts d) ein Thermoformen unter Vakuum ist mit einer Elastomermembran (18), die unter Vakuum gesetzt wird, und mit Erwärmung durch eine Infrarotstrahlung (19) des Formwerkzeugs (11), der thermoplastischen Folie (10), der Lage eines die Vorform (16) bildenden Materials, der Antihaftschicht(en) (17) und der Elastomermembran (18); wobei die Elastomermembran (18) anschließend entfernt wird.

3. Verfahren nach Anspruch 1, bei dem das Thermoformen des Schritts d) ein mechanisches Thermoformen mit einer Presse und einer erwärmten Matrize ist.

4. Verfahren nach Anspruch 1, bei dem das Thermoformen des Schritts d) ein Thermoformen im Autoklav oder im Ofen ist.

5. Verfahren nach einem der vorhergehenden Ansprüche, bei dem das die Vorform bildende Material aus Verstärkungsfasern besteht, die mit einem härtbaren Harz vorimprägniert sind.

6. Verfahren nach einem der vorhergehenden Ansprüche, bei dem das Bauteil eine Aussteifung einer selbstversteifenden Platte ist.

7. Verfahren nach einem der Ansprüche 1 bis 5, bei dem das Bauteil eine selbstversteifende Platte aus Verbundmaterial ist, die aus einer Basishaut besteht, wobei auf einer ihrer Seiten L-förmige Aussteifungen angesetzt und nebeneinander angeordnet sind, die Rippen bilden, wobei die Basisteile des L gegen die Haut gepresst sind, wobei zwischen den Schenkeln des L gegenüber von zwei angrenzenden Aussteifungen eine "Nagel" genannte Grenzflächenstruktur eingefügt ist, die aus zwei aneinandergefügten Halbnägeln besteht.

8. Verfahren nach einem der Ansprüche 1 bis 5, bei dem das Bauteil eine selbstversteifende Platte aus Verbundmaterial ist, die aus einer Basishaut (27) besteht, wobei auf einer ihrer Seiten U-förmige Aussteifungen angesetzt und nebeneinander angeordnet sind, die Rippen bilden, wobei die Verbindungsteile (20) der Schenkel des U (21) gegen die Haut (27) gepresst sind, wobei zwischen den Schenkeln des U (21) gegenüber von zwei angrenzenden Aussteifungen eine "Nagel" genannte Grenzflächenstruktur eingefügt ist, die aus zwei aneinandergefügten Halbnägeln besteht.

9. Verfahren nach Anspruch 8, wobei das Verfahren die folgenden aufeinander folgenden Schritte umfasst:
A) Herstellen von Vorformen von U-förmigen Aussteifungen, von denen jede mit einer thermoplastischen Vakuumfolie auf den Innenflächen des U versehen ist und jede sich auf einem Formwerkzeug mit dem einem umgekehrten U entsprechenden Querschnitt befindet, durch die Schritte a) bis e) des weiter oben beschriebenen Verfahrens;
B) Wenden jedes der Formwerkzeuge um 180°;
C) Anbringen, an jeder der Seitenwände jedes ausgekleideten Formwerkzeugs, eines Halbnagels;
D) einzelnes Kompaktieren jedes mit Halbnägeln versehenen Formwerkzeugs;
E) Positionieren der Formwerkzeuge nebeneinander auf der Basishaut, so dass an diese Haut eine durchgehende ebene Fläche angelegt wird, die zum einen durch die Außenseite der Verbindungsteile der Schenkel der U der Vorformen der Aussteifungen und zum anderen durch die zwei Vorformen trennende Nägel gebildet wird;
F) Entfernen der Formwerkzeuge;
G) Verbinden aller thermoplastischen Vakuumfolien der Aussteifungsvorformen, um eine einzige thermoplastische Vakuumfolie zu erhalten.

10. Verfahren zur Herstellung eines Bauteils aus Verbundmaterial durch Aushärten unter Vakuum, umfassend die folgenden aufeinander folgenden Schritte:
A1) Herstellen einer Vorform des Bauteils aus Verbundmaterial, die mit einer thermoplastischen Vakuumfolie versehen ist, mittels des Verfahrens nach einem der Ansprüche 1 bis 9;
B1) Aushärten der Vorform unter Vakuum;
C1) Erhalten des Bauteils aus Verbundmaterial.

## Claims

1. Method for manufacturing a preform of a component made of composite material provided with a vacuum bagging film (10), this method comprising the following successive steps:
a) deposition of a thermoplastic vacuum bagging film (10) on a forming tool (11), the form of which conforms to an outer form or geometry of the preform;
b) deposition of a sheet of a material constituting the preform (16) on the forming tool (11);
c) deposition of at least one anti-adhesive layer, preferably of at least two anti-adhesive layers (17), on the sheet of a material constituting the preform (16);
d) thermoforming of the thermoplastic film (10), of the sheet of a material constituting the preform (16), and of the anti-adhesive layer or layers (17), on the forming tool (11);
e) separation of the preform provided with the thermoplastic vacuum bagging film (10), which is located on the forming tool (11), from the anti-adhesive layer or layers (17);
f) **characterized by** the removal of the forming tool (11) so as to obtain the preform provided with the thermoplastic vacuum bagging film.

2. Method according to Claim 1, wherein the thermoforming of the step d) is a vacuum thermoforming with an elastomer membrane (18) placed in a vacuum and with heating, by infrared radiation (19), of the forming tool (11), of the thermoplastic film (10), of the sheet of a material constituting the preform (16), of the anti-adhesive layer or layers (17), and of the elastomer membrane (18); the elastomer membrane (18) then being removed.

3. Method according to Claim 1, wherein the thermoforming of the step d) is a mechanical thermoforming with a press and a heated die.

4. Method according to Claim 1, wherein the thermoforming of the step d) is a thermoforming in an autoclave or in an oven.

5. Method according to any one of the preceding claims, wherein the material constituting the preform consists of reinforcing fibres pre-impregnated with a hardenable resin.

6. Method according to any one of the preceding claims, wherein the component is a stiffener of a self-stiffened panel.

7. Method according to any one of Claims 1 to 5, wherein the component is a self-stiffened panel made of composite material consisting of a base skin on one of the faces of which rib-forming L-shaped stiffeners are added and arranged side-by-side, of which the base parts of the L are pressed against said skin, with insertion, between the facing branches of the L of two adjacent stiffeners, of an interfacing structure called "nail", consisting of two attached half-nails.

8. Method according to any one of Claims 1 to 5, wherein the component is a self-stiffened panel made of composite material consisting of a base skin (27) on one of the faces of which rib-forming U-shaped stiffeners are added and arranged side-by-side, of which the link parts (20) between the branches of the U (21) are pressed against said skin (27), with insertion, between the facing branches of the U (21) of two adjacent stiffeners, of an interfacing structure called "nail", consisting of two attached half-nails.

9. Method according to Claim 8, wherein the method comprises the following successive steps:
A) manufacturing of preforms of U-shaped stiffeners, each provided with a thermoplastic vacuum bagging film on the internal surfaces of the U, and each being located on a forming tool with inverted U-shaped conformal section, by the steps a) to e) of the method described above;
B) turning over of each of the forming tools by 180°;
C) placement, on each of the flanks of each coated forming tool, of a half-nail;
D) individual compacting of each forming tool provided with the half-nails;
E) positioning of the forming tools side-by-side on the base skin so as to apply against this skin a continuous flat surface defined, on the one hand, by the outer face of the link parts between the branches of the Us of the preforms of the stiffeners and, on the other hand, by the nails separating two preforms;
F) removal of the forming tools;
G) assembly of all the thermoplastic vacuum bagging films of the stiffener preforms to obtain a single thermoplastic vacuum bagging film.

10. Method for manufacturing a component made of composite material, by vacuum curing, comprising the following successive steps:
A1) manufacturing of a preform of the component made of composite material provided with a thermoplastic vacuum bagging film by means of the method according to any one of Claims 1 to 9 ;
B1) vacuum curing of the preform;
C1) obtaining of the component made of composite material.
